# EUROPÄISCHE PATENTANMELDUNG

(11) **EP 0 919 433 A1**
(43) Veröffentlichungstag der Anmeldung: **02.06.1999**
(21) Anmeldenummer: 98120624.6
(22) Anmeldetag: 02.11.1998
(51) Int. Cl.: B60P 3/36, B62D 25/20, B62D 29/04

(54) **Grossraumfahrzeug**

(30) Priorität: 05.11.1997 DE 19748894
(71) Anmelder: Hymer AG, 56751 Polch (DE)
(72) Erfinder: Kessler, Manfred, 56220 Urmitz (DE)
(74) Vertreter: Reinhard - Skuhra - Weise & Partner

(57) **Zusammenfassung**

Die Erfindung betrifft ein Großraumfahrzeug, insbesondere Wohnmobil oder dgl., mit einem Fahrgestell (1) und einer von diesem getragenen Bodengruppe, mit Ver/Entsorgungseinrichtungen (12,14,15), wie etwa Frisch- und Abwassertanks, Bordbatterien und mit Stauraum für beispielsweise Gepäck. Um Raumverlust durch die notwendige Installation der Ent/Versorgungseinrichungen (12,14,15) und/oder Bereitstellen von Stauraum zu vermeiden und eine bessere Montagemöglichkeit der Installationen wie Tanks, Batterien usw. durch Einlegen und Befestigen anstelle von aufwendigen Anhängigkeitsvorrichtungen zu schaffen, ist erfindungsgemäß vorgesehen, daß die Bodengruppe einen Funktionsboden (6) mit Vertiefungen zur Aufnahme der Ver/Entsorgungseinrichtungen (12,14,15) und/oder zur Bereitstellung von Stauraum aufweist.

## Beschreibung

Die vorliegende Erfindung betrifft ein Großraumfahrzeug, insbesondere ein Wohnmobil oder dergleichen, mit einem Fahrgestell und einer von diesem getragenen Bodengruppe, mit Ver-/Entsorgungseinrichtungen, wie etwa Frisch- und Abwassertanks und Bordbatterien, und mit Stauraum für beispielsweise Gepäck.

Bei Großraumfahrzeugen der in Rede stehenden Art wurde die Ver- und Entsorgungstechnik bislang im Nutz- bzw. Wohnraum bzw. Aufbau installiert oder in einem doppelten Boden untergebracht. Nachteilig ist dabei, daß extreme Aufbauhöhen durch den doppelten Boden erforderlich sind bzw. bei einer Unterbringung der Fahr- und Entsorgungstechnik im Wohnraum ein erheblicher Stauraumverlust in Kauf genommen werden muß.

Außerdem erfordert ein doppelter Boden ebenso wie eine Montage von Tanks im Wohnraum hohe Fertigungskosten durch entsprechende Montagezeit und Materialaufwand.

Angesichts dieses Standes der Technik liegt der Erfindung die Aufgabe zugrunde, ein Großraumfahrzeug zu schaffen, bei welchem Ver-/Entsorgungseinrichtungen bzw. Stauraum unter Berücksichtigung einer Montagevereinfachung nicht auf Kosten des Wohn- bzw. Nutzraums geht.

Erfindungsgemäß wird diese Aufgabe durch die im Patentanspruch 1 genannten Merkmale. Vorteilhafte Weiterbildungen der Erfinddung sind in den Unteransprüchen angegeben.

Demgemäß macht die Erfindung ein Großraumfahrzeug, insbesondere ein Wohnmobil oder dergleichen mit den eingangs genannten Merkmalen verfügbar, bei dem eine Bodengruppe aus einem schalenförmigen Funktionsboden, vorzugsweise aus GFK, mit Vertiefung zur Aufnahme der Ver-/Entsorgungseinrichtungen und/oder zur Bereitstellung von Stauraum und einen auf dem Funktionsboden beabstandet befestigten Laufboden aufweist, wobei vorzugsweise der Funktionsboden erhabene Ausformungen für die beabstandete Befestigung des Laufbodens besitzt und wobei der Abstand zwischen Funktionsboden und Laufboden ausreichend für die Aufnahme von Rohren und Leitungen bemessen ist. Vorteilhaft besteht dabei die Bodengruppe nicht aus Sandwichmaterial sondern aus zwei einzelnen beabstandeten Böden, die in ihrem kompletten Aufbau wie eine Sandwichplatte wirken. Günstigerweise ermöglicht dabei der Abstand zwischen den beiden Böden eine freie Verlegung von Rohren und Leitungen, was eine deutliche Kostenersparniss und eine Montagevereinfachung bedeutet. Überdies kann vorteilhaft insbesondere bei einem Laufboden aus Holz, und bei Vorsehen einer in den Funktionsboden integrierten Fußbodenheizung die von den Heizungsrohren in den Zwischenraum zwischen den Funktionsboden und den Laufboden austretende Wärme, ggf. mit zusätzlicher Luftumwälzung, so verteilt werden, daß der komplette Boden wie eine Fußbodenheizung wirkt und der Laufboden gleichmäßiger beheizt wird. Der Laufboden und der Funktionsboden sind nach der Montage fest miteinander verbunden und bilden eine feste Einheit mit einem sonstigen Aufbau, beispielsweise einem Wohnaufbau.

Grundsätzlich kann der Funktionsboden aus mehreren Teilen bestehen, beispielsweise aus mehreren tiefgezogenen Blechen oder mehreren gegossenen Kunststoff-Formteilen, welche das Fahrzeugchassis bzw. das Fahrgestell überdecken. Vorteilhaft ist der Funktionsboden jedoch einstückig, entweder aus einem tiefgezogenen Blech oder einem gegossenen Kunststoff-Formteil gebildet. In jedem Fall erfolgt die Montage des Funktionsbodens auf dem Fahrgestell von oben.

Um die Zusatzaggregate bzw. die Ver-/Entsorgungseinrichtungen positionsmäßig in den für sie gebildeten Vertiefungen festzusetzen, sind diese bevorzugt an die Außenkontur der jeweiligen Einrichtungen formmäßig angepaßt. Alternativ bzw. zusätzlich hierzu können in den Vertiefungen Arretiermittel für die dort aufzunehmenden Einrichtungen vorgesehen sein.

Bevorzugt sind weitere Teile, die bislang Bestandteil des Fahrgestells bzw. der Karosserie waren, an den Funktionsboden angeformt, wie etwa Radkästen, Trittstufen und dergleichen.

Außerdem können im Funktionsboden Vertiefungen zur Verlegung von Rohren, Schläuchen, Leitungen und Kanälen vorteilhafterweise ausgebildet sein.

Vorteilhafterweise umfaßt die erfindungsgemäße Bodengruppe zusätzlich zu dem Funktionsboden auch einen Laufboden, der punktförmig auf dem Funktionsboden mittels Abstandhalter bzw. Auflageböcken gelagert ist, die mit dem Funktionsboden vorzugsweise einstückig gebildet sind und von diesem vorstehen. Alternativ können die Auflageböcke auch an der Unterseite des Laufbodens vorgesehen sein.

Außerdem enthält der Laufboden über zumindest einem Teil der unter ihm liegenden Vertiefungen des Funktionsbodens Klappen, Deckel oder dergleichen Elemente zur Erleichterung des Zugangs zu den Vertiefungen bzw. zu der darin enthaltenen Einrichtungen.

Ferner besteht der Funktionsboden vorteilhafterweise aus wärmeisolierendem Material oder er trägt ein derartiges Material, vorteilhafterweise im Zwischenraum zwischen Funktionsboden und Laufboden. Außerdem kann im Funktionsboden bzw. im Laufboden eine Bodenheizung integriert sein.

Da der Funktionsboden und gegebenenfalls auch der Laufboden Formteile sind, ist die Dichtigkeit der durch sie gebildeten Bodengruppe gewährleistet.

Ein weiterer Vorteil der Vertiefungen zur Aufnahme von Zusatzaggregaten bzw. Einrichtungen besteht darin, daß tiefliegende Tanks, Batterien und Staugepäck, die in Vertiefungen eingebracht sind, das Fahrverhalten des Großraumfahrzeugs verbessern.

Zu den Teilen, die im Funktionsboden vorteilhafterweise untergebracht bzw. verstaut werden können, gehören: Frischwassertank, Abwassertank, Bordbatterien, Relaisbox, Ladegerät, Heizungsboiler, Heizungsrohre, Elektroleitungen, Frisch- und Abwasserrohre, Gepäck und Campingzubehör.

Nachfolgend wird die Erfindung anhand der Zeichnungen beispielhaft näher erläutert.

Es zeigen:
Fig. 1 eine Explosionsansicht einer Bodengruppe und eines Fahrgestells eines Großraumfahrzeugs mit erfindungsgemäßem Funktionsboden,
Fig. 2 eine Draufsicht einer weiteren Ausführungsform des erfindungsgemäße Funktionsbodens, und
Fig. 3 eine Schnittansicht entlang der mit den Pfeilen A-A bezeichneten Linie von Fig. 2.

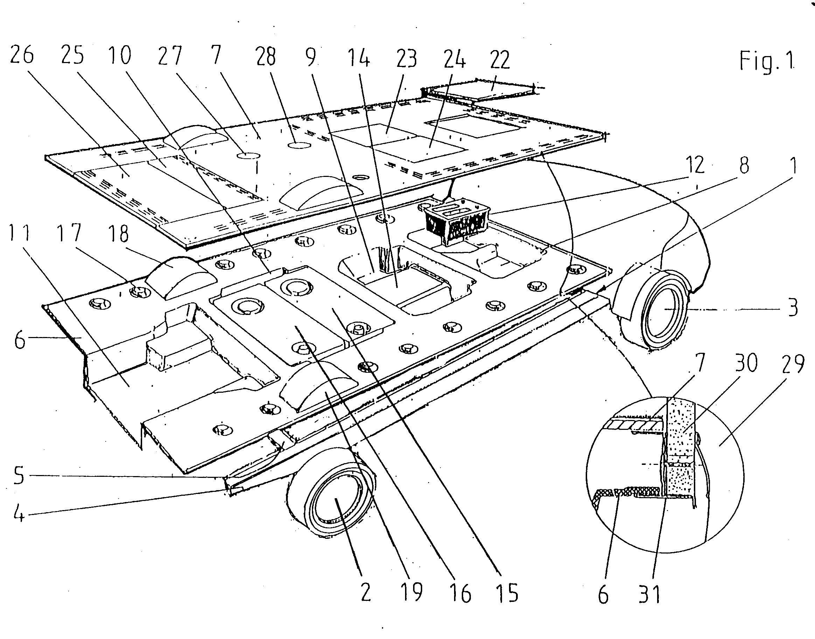

Das in Fig. 1 im Bereich der Bodengruppe gezeigte Großraumfahrzeug weist ein Fahrgestell 1 mit vier Rädern auf, von denen ein Hinterrad 2 und ein Vorderrad 3 gezeigt sind. Auf Längs- und Querträgern 4 bzw. 5 des Fahrgestells 1 ruht, fest mit diesem verbunden, eine Bodengruppe, die aus einem untenliegenden Funktionsboden 6 unter einem obenliegenden Laufboden 7 besteht. Die Bodengruppe 6, 7 erstreckt sich im wesentlichen über das gesamte Fahrgestell, wobei Funktionsboden 6 und Laufboden 7 zumindest in etwa flächengleich rechteckig gebildet sind. Sowohl der Funktionsboden 6 wie der Laufboden 7 können aus unterschiedlichen geeigneten Materialien, beispielsweise aus Blech oder aus Kunststoff, bevorzugt aus faserverstärktem Kunststoff bestehen. Zumindest bei dem Funktionsboden 6 handelt es sich um ein tiefgezogenes Blechteil bzw. ein entsprechendes geformtes Kunststoff-Formgußteil.

Erfindungsgemäß ist der Funktionsboden 6 mit mehreren Vertiefungen versehen, die zur Aufnahme von Zusatzeinrichtungen und speziellen Funktionen des Großraumfahrzeugs bestimmt sind, weshalb der Boden 6 die Bezeichnung "Funktionsboden" trägt. Bei der in Fig. 1 gezeigten Ausführungsform sind insgesamt vier wannenförmige Vertiefungen im Laufboden 7 ausgebildet, nämlich eine am Vorderrand des Funktionsbodens 6 liegende erste Vertiefung 8, eine sich daran in Rückwärtsrichtung anschließende zweite Vertiefung 9, eine sich an diese in Rückwärtsrichtung anschließende dritte Vertiefung 10 und eine vierte Vertiefung 11, die am hinteren Rand des Funktionsbodens 6 angeordnet ist. Sämtliche Vertiefungen 8 bis 11 haben allgemein rechteckige Wannenform und sind komplementär ausgebildet zu den Umrissen von Aggregaten bzw. Einrichtungen, die bestimmungsgemäß in den Vertiefungen unterzubringen sind.

Beispielsweise ist die erste Vertiefung 8 zur Aufnahme von zwei Batterien bestimmt, von denen die eine, linke Batterie 12 gezeigt ist, für welche die erste Vertiefung 8 in ihrem linken Bereich entsprechend paßförmig gebildet ist. Zur Bereitstellung dieser Paßform sind die Längs- und Seitenwände der ersten Vertiefung 8 an die entsprechende Außenkontur der Batterie 12 bzw. der nicht gezeigten weiteren Batterie angepaßt. Außerdem ist in der Mitte der ersten Vertiefung 8 ein seitliches Arretivelement für die beiden Batterien in Gestalt einer Bodenwölbung 13 vorgesehen.

Eine ähnliche Bodenwölbung 14 befindet sich in der zweiten Vertiefung 9.

Die dritte Vertiefung 10 ist ohne eine Bodenwölbung zur Aufnahme eines Frischwassertanks 15 und eines Abwassertanks 16 gebildet, die in der dargestellten Ausführungsform etwa identische Form haben, unmittelbar seitlich aneinandergrenzen und die dritte Vertiefung 10 mit Ausnahme von seitlichen Freiräumen zur Handhabung dieser Tanks ausfüllen.

Die hintere bzw. vierte Vertiefung 11 ist ebenfalls mit glattem Boden und im wesentlichen senkrecht verlaufenden Seitenwänden gebildet und zum Hinterrand des Funktionsbodens 6 hin offen. Damit eignet sich die vierte Vertiefung 11 besonders gut als Stauraum für beispielsweise Gepäck oder Camping-Ausrüstung, welcher Stauraum gegebenenfalls über eine Karosserieklappe angrenzend an den Hinterrand des Funktionsbodens 6 zugänglich ist. Im übrigen sind die Vertiefungen 8 bis 11 von der Oberseite aus zugänglich, wie im folgenden erläutert.

Der Laufboden 7 ist dazu bestimmt, auf dem Funktionsboden 6 aufzuliegen und an diesem befestigt zu werden. Vorteilhafterweise liegt der Laufboden 7 nicht vollflächig auf dem Funktionsboden 6 auf, sondern ist auf diesem Punkt - bzw. abschnittsweise gelagert. Zu diesem Zweck sind über die gesamte Fläche des Funktionsbodens 6 verteilt an diesem Auflageböcke vorgesehen, beispielsweise in Gestalt von kugelschalenförmigen Ausbuchtungen und bzw. erhabene Ausformungen 17, die entlang den Seitenrändern des Funktionsbodens 6 angeordnet und gleich hoch ist. Stellvertretend ist eine dieser Ausbuchtungen in Fig. 1 mit der Bezugsziffer 17 bezeichnet. Zusätzlich können weitere derartige Ausbuchtungen quer über den Funktionsboden 6 verteilt sein.

In gleicher Weise wie die Ausbuchtungen 17 nach oben vorspringen, sind in den Funktionsboden 6 hochstehende Radkästen bzw. zumindest deren oberen Teile eingeformt und mit den Bezugsziffern 18 und 19 versehen. Die Radkästen 18 und 19 finden im Laufboden 7 ihre Entsprechung und mit den Bezugsziffern 20 und 21 bezeichnet. Im übrigen ist der Laufboden 7 eben gebildet und hat jeweils über den Vertiefungen 8 bis 9 liegend Klappen bzw. Deckel, um den Zugang zu diesen Vertiefungen zu ermöglichen. Demnach ist über der ersten Vertiefung 8 des Laufbodens 7 ein abnehmbarer Deckel 22 vorgesehen. Über der zweiten Vertiefung 9 des Funktionsbodens 6 sind im Laufboden 7 zwei aneinandergrenzende Deckel 23, 24 vorgesehen.

Über der vierten hinteren Vertiefung 11 des Laufbodens 7 sind zwei aneinandergrenzende Klappen 25, 26 schwenkbar im Laufboden 7 angeordnet. Anstelle von Deckeln bzw. Klappen sind über der dritten Vertiefung 10 im Funktionsboden 6 zur Aufnahme des Frischwassertanks 15 und des Abwassertanks 16 Durchbrüche 27, 28 vorgesehen, durch welche hindurch Schläuche mit diesen Tanks in Verbindung gebracht werden können.

Nicht dargestellt sind weitere Vertiefungen, welche in den Funktionsboden 6 eingelassen bzw. eingeformt sind, um Verlegewege, Heizkanäle, Leitungs- und Schlauch- und Rohraufnahmen aufzunehmen bzw. zu bilden. Außerdem können an den Funktionsboden 6 Befestigungsmittel angeformt sein, um diesen an den Längs- und Querträgern 4, 5 des Fahrgestells 1 zu befestigen. Entsprechende Mittel können auch zur Fixierung des Laufbodens 7 am Funktionsboden 6 an diesem angeformt sein. Im übrigen ist in einer mit 29 bezeichneten Einzelheit eine Befestigung des Laufbodens 7 am Funktionsboden 6 am Seitenrandbereich sowie an einer Karosseriewand 30 vorgesehen, und zwar mittels eines im wesentlichen U-förmigen Befestigungsprofils 31, beispielsweise in Gestalt eines Blechteils.

Ebenfalls nicht dargestellt sind weitere am Funktionsboden 6 angeformte Teile, wie etwa Trittstufen.

Ebenfalls nicht dargestellt ist eine Bodenheizung, die ebenfalls in den Funktionsboden 6 oder gegebenenfalls in den Laufboden 7 integriert sein kann. Außerdem nicht gezeigt sind Isolationselemente, beispielsweise in Form von Isoliermatten, die gegebenenfalls zwischen dem Funktionsboden 6 und dem Laufboden 7 angeordnet sind.

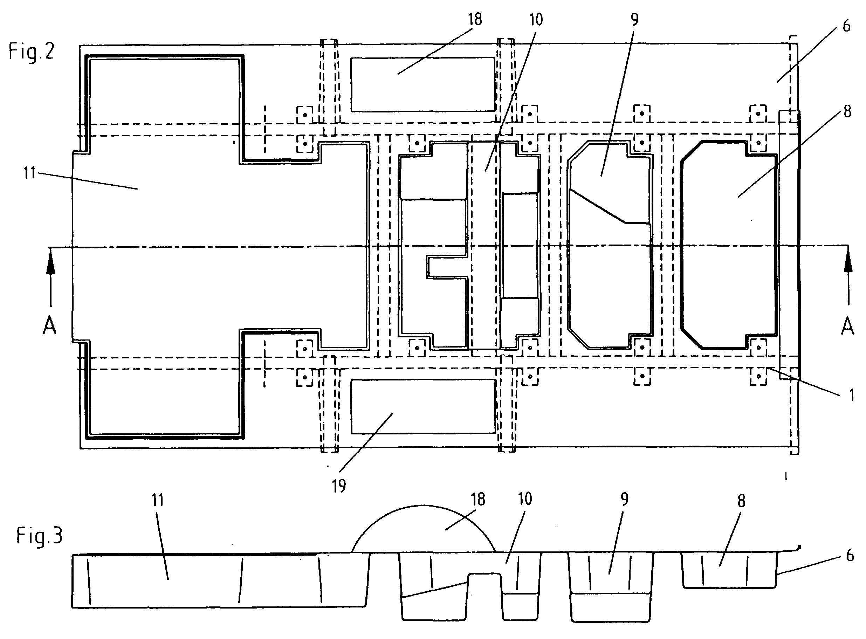

Fig. 2 und 3 zeigen eine abgewandelte Ausführungsform des Funktionsbodens 6 in Draufsicht bzw. Längsschnittansicht entlang der Längsmitte des Funktionsbodens. Die Anordnung und Ausbildung der Vertiefungen bzw. Radkästen dieses Funktionsbodens 6' entsprechen im wesentlichen denjenigen des Funktionsbodens von Fig. 1, bis auf Varianten der Gestalt der wannenförmigen Vertiefungen, weshalb die Fig. 1 entsprechenden Elemente bzw. Bauteile in Fig. 2 und 3 mit denselben Bezugsziffern bezeichnet sind. Strichliert ist in Fig. 2 außerdem das Fahrgestell 1 direkt unterhalb des Funktionsbodens 6 dargestellt.

## Patentansprüche

1. Großraumfahrzeug, insbesondere Wohnmobile oder dergleichen, mit einem Fahrgestell (1) und einer von diesem getragenen Bodengruppe mit Ver-/Entsorgungseinrichtung (12, 14, 15) wie beispielsweise Frisch- und Abwassertanks und Bordbatterien, und mit Stauraum für Gepäck und dergleichen,
wobei die Bodengruppe einen schalenförmigen Funktionsboden (6), insbesondere aus GFK, mit Vertiefungen (8, 9, 10, 11) zur Aufnahme der Ver-/Entsorgungseinrichtung (12, 14, 15) und/oder zur Bereitstellung von Stauraum sowie einen auf dem Funktionsboden (6) beabstandet befestigbaren Laufboden (7) aufweist.

2. Großraumfahrzeug nach Anspruch 1,
dadurch gekennzeichnet,
daß der Funktionsboden (6) erhabene Ausformungen (17, 18) aufweist, wobei der Abstand zwischen Funktionsboden (6) und Laufboden (7) ausreichend für die Aufnahme von Rohren und Leitungen bemessen ist.

3. Großraumfahrzeug nach Anspruch 1 oder 2,
dadurch gekennzeichnet,
daß der Funktionsboden (6) einteilig gebildet ist.

4. Großraumfahrzeug nach Anspruch 1 oder 2,
dadurch gekennzeichnet,
daß der Funktionsboden (6) aus mehreren Einzelteilen gebildet ist.

5. Großraumfahrzeug nach Anspruch 1, 2 oder 3,
dadurch gekennzeichnet,
daß der Funktionsboden (6) aus wenigstens einem Formteil ist.

6. Großraumfahrzeug nach Anspruch 5,
dadurch gekennzeichnet,
daß der Funktionsboden (6) ein ggf. faserverstärktes Kunststoff-Gußformteil oder ein thermoplastisches Tiefziehformteil ist.

7. Großraumfahrzeug nach einem der Ansprüche 1 bis 6,
dadurch gekennzeichnet,
daß die Vertiefungen (8 bis 11) an die Außenkontur der Ver/Entsorgungseinrichtungen (12, 14, 15) formmäßig angepaßt sind.

8. Großraumfahrzeug nach einem der Ansprüche 1 bis 7,
dadurch gekennzeichnet,
daß in den Vertiefungen (8 bis 11) Arretiermittel für die dort aufzunehmenden Ver/Entsorgungseinrichtungen (12, 14, 15) vorgesehen sind.

9. Großraumfahrzeug nach einem der Ansprüche 1 bis 8,
dadurch gekennzeichnet,
daß an den Funktionsboden (6) Fahrgestellbestandteile, wie etwa Radkästen (18, 19), Trittstufen und dgl. angeformt sind.

10. Großraumfahrzeug nach einem der Ansprüche 1 bis 9,
dadurch gekennzeichnet,
daß im Funktionsboden (6) Vertiefungen zur Verlegung von Rohren, Schläuchen, Leitungen und Kanälen gebildet sind.

11. Großraumfahrzeug nach einem der vorangehenden Ansprüche,
dadurch gekennzeichnet,
daß der Laufboden (7) aus Holz besteht.

12. Großraumfahrzeug nach Anspruch 11,
dadurch gekennzeichnet,
daß der Laufboden (7) über zumindest einem Teil der Vertiefungen (8 bis 11) des Funktionsboden (6) Klappen, Deckel oder dgl. Elemente (22 bis 26) für einen Zugang zu den Vertiefungen (8 bis 11) aufweist.

13. Großraumfahrzeug nach einem der Ansprüche 1 bis 12,
dadurch gekennzeichnet,
daß am Funktionsboden (6) Mittel für seine Befestigung am Fahrgestell (1) sowie ggf. zur Befestigung des Laufbodens (7) angeformt sind.

14. Großraumfahrzeug nach einem der Ansprüche 1 bis 13,
dadurch gekennzeichnet,
daß der Funktionsboden (6) aus wärmeisolierendem Material besteht oder derartiges Material trägt.

15. Großraumfahrzeug nach einem der vorangehenden Ansprüche,
dadurch gekennzeichnet,
daß in den Funktionsboden (6) eine Fußbodenheizung integriert ist, deren Wärmeabgabe über den Zwischenraum zwischen Funktionsboden und Laufboden auf den Laufboden (7) verteilbar ist.
